Europäisches Patentamt

European Patent Office

Office européen des brevets

(19)

(11) Numéro de publication: **0 177 401**

**B1**

(12) **FASCICULE DE BREVET EUROPEEN**

(45) Date de publication du fascicule du brevet: **04.07.90**

(21) Numéro de dépôt: **85401835.5**

(22) Date de dépôt: **20.09.85**

(51) Int. Cl.⁵: **C 08 F 255/02** // C08L51/06 ,(C08F255/02, 222:06)

(54) **Polymères obtenus à partir d'oligomères de polypropylène greffé par un anhydride, procédé de fabrication et utilisations.**

(30) Priorité: **27.09.84 FR 8414880**

(43) Date de publication de la demande:
**09.04.86 Bulletin 86/15**

(45) Mention de la délivrance du brevet:
**04.07.90 Bulletin 90/27**

(84) Etats contractants désignés:
**BE CH DE FR GB IT LI LU NL SE**

(56) Documents cités:
**FR-A-2 355 045**
**FR-A-2 519 013**
**GB-A- 932 514**
**US-A-4 059 650**
**US-A-4 382 128**

**CHEMICAL ABSTRACTS, vol. 71, no. 13, 29 décembre 1969, page 52, no. 125469g, Columbus, Ohio, US**

(73) Titulaire: **ATOCHEM**
**4 & 8, Cours Michelet La Défense 10**
**F-92800 Puteaux (FR)**

(72) Inventeur: **Nogues, Pierre**
**Résidence Saint-Germain Boulevard de Normandie**
**F-27000 Evreux (FR)**

Courier Press, Leamington Spa, England.

EP 0 177 401 B1

**Description**

On sait par les brevets GB 932 514, FR 2 519 013, US 4 059 650 et 4 382 128 que l'on peut modifier avantageusement certaines des propriétés physiques ou mécaniques des polyoléfines en créant sur celles-ci des sites actifs et en les réticulant par des composés polyfonctionnels capables de réagir avec ces sites actifs.

Ces réactions de greffage concernaient des polyoléfines de masse moléculaire élevée.

La présente invention, elle, met en oeuvre du polypropylène de masse moléculaire faible et, par suite, de faible viscosité de fusion.

Elle a pour objet un procédé de fabrication d'objets moulés par la technique de réaction-injection-moulage ou de fabrication d'éléments profilés à âme en fibres de verre ou de revêtement d'objet métallique, procédé mettant en oeuvre un mélange liquide de deux constituants réagissant entre eux. Ces deux constituants possèdent tous deux une faible viscosité de fusion et sont: l'un un polypropylène modifié par greffage d'un monomère porteur de fonction anhydride d'acide et l'autre un composé possédant au moins deux fonctions réactives vis-à-vis de cette fonction anhydride, composé que, pour des raisons de commodité, nous appellerons, par la suite, composé réactif ou "composé R".

L'un et l'autre de ces constituants, pris isolément, ont des masses moléculaires peu élevées et, par suite, des propriétés mécaniques excessivement faibles; il n'en est pas de même des produits résultant de leur réaction, véritables polymères qui possèdent des propriétés physiques et mécaniques intéressantes.

De nombreuses méthodes ont été proposées pour préparer le premier constituant, le polypropylène greffé.

Par polypropylène greffé (PPg), nous désignons tous les homopolymères du propylène ou copolymères avec divers monomères (qu'ils soient séquencés ou statistiques, à condition que ces copolymères contiennent au moins 50% en moles de propylène) sur lesquels on a greffé un monomère insaturé porteur de fonction anhydride d'acide.

Ce monomère de greffage est un composé porteur d'au moins une double liaison, active en polymérisation radicalaire, et d'au moins une fonction anhydride d'acide cyclique à cinq centres.

Ce peut être l'anhydride maléique, citraconique, 2-méthyl maléique, 2-chloro maléique, 2-carbométhoxy maléique, 2,3-diméthyl maléique, 2,3-dichloro maléique, 2,3-dicarbométhoxy maléique, bicyclo (2.2.1) hept-5-ène-2,3 dicarboxylique, 4 méthyl cyclohex-4-ène, 1,2 dicarboxylique.

Pour réaliser le greffage, on peut préparer des sites sur la chaîne de polypropylène par traitement avec des amorceurs du type peroxydique ou diazoïque ou par traitement électromagnétique, sites sur lesquels viendra se greffer par voie radicalaire l'anhydride.

On peut également réaliser simultanément l'activation et le greffage en soumettant à l'action d'un peroxyde une suspension de poudre de polypropylène dans un liquide ou une solution de polypropylène dans un solvant convenable (US 2 970 129); on peut aussi opérer dans un courant gazeux (US 3 414 551), le solvant ou le courant gazeux contenant la quantité convenable du monomère de greffage défini précédemment.

On peut également opérer à l'état fondu.

Il est bien connu que ces réactions s'accompagnent au niveau de la chaîne de polypropylène ou de copolymère de propylène, de réactions de coupures de chaînes abaissant de ce fait la masse moléculaire du polymère et, par suite, sa viscosité de fusion.

Cet effet de dégradation peut être limité par le jeu des réactions du monomère à greffer ou, au contraire, être amplifié par les réactions de dismutation et de transfert de ce même monomère.

Mais, dans la plupart des cas, on obtient des PPg de viscosités de fusion beaucoup plus faibles que celles des polymères qui les ont engendrés, autrement dit des oligomères.

Les PPg utilisés doivent avoir une viscosité de fusion inférieure à 500 Pa.s, mesurée à 200°C pour un taux de cisaillement de 10 $s^{-1}$.

Cette viscosité a été déterminée au moyen d'un RHEOMAT 30, viscosimètre à deux cylindres coaxiaux fabriqué par la Société Suisse CONTRAVES.

Le composé R dont le poids moléculaires est inférieur à 50.000 sera porteur d'au moins deux fonctions réactives, identiques ou non, vis-à-vis de la fonction anhydride d'acide du PPg; parmi ces fonctions réactives citons, entre autres, la fonction alcool, la fonction amine, la fonction époxyde, la fonction isocyanate.

Ce peut donc être un diol ou un triol ou une diamine ou une triamine ou un composé possédant à la fois une fonction alcool et une fonction amine ou deux fois la fonction amine et une fois la fonction alcool.

Parmi les composés R possédant au moins deux fois la fonction alcool, citons: l'éthylène glycol, le propylène glycol, le butane diol-1,3, le butane diol-1,4, l'hexane diol-1,6, le 2-butène 1,4 diol, l'(hydroxy-2 éthoxy) 1-4 butanol-1, l'hexane triol 1,2,6, l'érythritol, le sucrose, le glucose, la dihydroxyacétone, les polyoxyalkylèneglycols tels que polyoxyéthylène glycols, polyoxytétraméthylène glycols de différents poids moléculaires, les dérivés hydroxylés des copolymères éthylène-acétate de vinyle.

Parmi les composés R possédant au moins deux fois la fonction amine, citons:

les oligomères polyamides alpha-oméga diamines de différents poids moléculaires dont la synthèse a été décrite dans les demandes de brevets au nom de la demanderesse FR 83—15859 et 84—13244;

les diamines aliphatiques ou aromatiques telles que hexaméthylène diamine, nonaméthylène diamine,

2

undécaméthylène diamine, dodécaméthylène diamine, métaxylylène diamine, bis-p. amino-cyclohexylméthane.

Parmi les composés R polyépoxydés, les composés les plus courants sont ceux qui dérivent de la réaction du bisphénol A et de l'épichlorhydrine et, notamment, les composés résultant de l'addition de deux molécules d'épichlorhydrine sur une molécule de bisphénol A, c'est-à-dire les diglycidyléthers de bisphénol A (DGEBA). Mais on peut utiliser un grand nombre d'autres résines époxydes telles que celles qui résultant de la fixation d'un groupe époxyde aux deux extrémités d'un chaîne d'hydrocarbure paraffinique (par exemple, des diépoxydes dérivés du butanediol), ou d'une chaîne de polyéther telle que le polypropylène glycol alpha, oméga, -diépoxyde, commercialisé par la Société DOW CHEMICAL sous la référence DER 732 ou DER 736. On peut aussi utiliser des composés diépoxydes plus particuliers tels que le dioxyde de vinylcyclohexène, l'époxy-3,4-cyclohexane-monocarboxylate d'époxy-3,4-cyclohexylméthyle, l'(époxy-3,4-cyclohexyl)-3-époxy-8,9-dioxa-2,4-spiro (5.5) undécane, le bis(époxy-2,3-cyclopentyl-éther, l'adipate de bis(époxy-3,4-méthyl-6-cyclohexyle), le diglycidyléther de résorcinol.

Parmi les composés R possédant au moins deux fois la fonction isocyanate, citons, parmi beacoup d'autres:

Le 2,4 ou 2,6 toluylène diisocyanate, le 4-4' diphénylméthanediisocyanate, le 1,4 ou le 1,6 hexaméthylène diisocyanate, le diisocyanate de 1,4 cyclohexyle, le 3-isocyanatométhyl 3,5,5 triméthylcyclohexylisocyanate, les triisocyanates tels que le triphénylméthane triisocyanate, par exemple.

Les quantités respectives des deux principaux constituants: PPg et composé R, qui réagiront entre eux seront telles que leur rapport de molarité, RM, défini ainsi:

$$RM = \frac{\text{Concentration en fonctions réactives portées par R}}{\text{Concentration en fonctions anhydride d'acide portées par le PPg}}$$

$$= \frac{\text{Nombre de fonctions réactives de R}}{\text{Nombre de fonctions anhydrides d'acide de PPg}}$$

soit compris entre 0,01 et 2 et, de préférence, entre 0,1 et 1, une fonction anhydride d'acide correspondant à deux fonctions acides carboxyliques.

La réaction aura lieu par simple malaxage à l'état fondu des deux constituants PPg et composé R; tout appareil de transformation des matières plastiques assurant un bon malaxage conviendra tel que malaxeur BRABENDER, BUSS, extrudeuse monovis, extrudeuse double vis type WERNER et PFLEIDERER. On peut même opérer dans un simple autoclave à bonne agitation.

Du fait que l'un et l'autre possèdant un faible viscosité de fusion, on peut utiliser la technique de Réaction-Injection-Moulage (RIM) telle que décrite dans Modern Plastica International, Avril 81, pour réaliser en une seule opération des pièces de grandes dimensions. (Ainsi, cette technique permet l'obtention de pièces moulées, de grandes dimensions, en polypropylène modifié ayant de bonnes propriétés mécaniques, alors qu'il serait très difficile, sinon impossible, d'obtenir les mêmes pièces par moulage par injection de polypropylène ordinaire, trop visqueux — en polypropylène réticule, ce serait impossible).

Dans ce cas, les deux constituants du système — PPg et R — sont stockés à l'état liquide dans deux réservoirs séparés, maintenu à une température suffisante pour que les deux réactifs soient fluides; la polymérisation des constituants et le moulage de l'objet fini sont réalisés simultanément en pompant, à partir des deux réservoirs, la quantité nécessaire de chacun des deux réactifs, en les mélangeant dans un dispositif spécial assurant très rapidement un mélange très intime des deux constituants et en injectant le mélange obtenu dans le moule. La polymérisation de la résine a lieu au cours du mélange des deux constituants dans la tête de mélange et se poursuit au cours du transfert dans le moule pour s'achever dans ce dernier.

On pourra également réaliser des éléments profilés par enrobage par la technique de "Pultrusion" d'une âme en fibre de verre qui défilera en continu dans une filière, dite tête d'équerre, alimentée en continu par le mélange liquide de PPg et du composé R, ladite filière ayant la section du profilé que l'on veut obtenir.

On pourra également utiliser ces nouveaux polymères comme liants dans la fabrication de matériaux composites.

On pourra également revêtir les objets métalliques et les protéger de la corrosion par emploi de ces composés polymériques.

En plus de ces deux constituants fondamentaux, ou peut utiliser également d'autres composés que l'on ajoutera au mélange réactionnel tels que polymères de dilution, stabilisants à la chaleur, à la lumière, à l'oxydation, colorants, plastifiants, charges diverses reinforçantes ou non.

On peut également préparer des systèmes plus complexes que le simple système bicomposant: PPg—R, en lui adjoignant un ou plusieurs constituants entrant en réaction avec PPg ou R.

Pour résumer l'invention se définit comme un procédé de fabrication d'objets moulés par la technique de réaction-injection-moulage ou de fabrication d'éléments profilés à âme en fibres de verre ou de revêtement d'objet métallique, procédé mettant en oeuvre un mélange liquide constitué d'une part d'un polypropylène greffé en milieu solvant par un monomère insaturé porteur de fonction anhydride d'acide, ledit polypropylène greffé possédant une viscosité de fusion, mesurée à 200°C pour un taux de cisaillement de 10 $s^{-1}$, inférieure à 500 Pa.s et d'autre part un composé R possédant au moins deux fonctions réactives vis-à-vis de cette fonction anhydride, identiques ou non, caractérisé en ce que les quantités respectives de ces deux constituants sont telles que leur rapport de molarité, défini comme la rapport du nombre de fonctions réactives portées par le composé R au nombre de fonctions anhydrides portées par le polypropylène greffé, soit compris entre 0,01 et 2, et de préférence, entre 0,1 et 1.

Pour illustrer l'invention, nous citerons les exemples suivants.

## Exemple 1

On greffe de l'anhydride maléique sur un homopolymère de propylène de la manière suivant:

dans autoclave, on introduit:

5500 g de monochlorobenzène

1200 g de LACQTENE 30 FNI (polypropylène vendu par la Société ATOCHEM — Indice de fluidité ASTM D 1238 à 230°C sous 5 kg égal à 5)

200 g d'anhydride maléique

36 g de péroxyde de benzoyle

Après maintien pendant 3 heures à la température de 130°C, on obtient un PP greffé à 2,7% dont la viscosité de fusion mesurée à 200°C à l'aide d'un RHEOMAT 30 à un taux de cisaillement de 10 $s^{-1}$ est de 10 Pa.s alors que celle du Lacqtène 3050 FNI était de 1300 Pa.s dans le mêmes conditions.

Dans une cuve de malaxeur BRABENDER, on mélange à la température de 178°C le PP greffé obtenu ci-dessus seul ou avec addition d'hexanediol-1,6.

Dans les deux cas, on retire les polymères au bout de 10 minutes de malaxage et on les moule par compression à la presse à 180°C en plaquettes de 2 mm d'épaisseur dans lesquelles on découpe des éprouvettes pour essais de traction de type $H_3$ (norme NFT 51034). On mesure ensuite la contrainte et l'allongement à la rupture de ces éprouvettes par traction à une vitesse de 1,42 mm/minutes.

Par ailleurs, on mesure la viscosité de fusion de ces polymères.

Voici les résultats trouves

| Poids de PPg en g | Poids d'hexanediol-1,6 en g | $RM = \dfrac{[OH]}{[AM]}$ | Contrainte à la rupture en MPa | Viscosité de fusion à 200°C en Pa·s |
|---|---|---|---|---|
| 45 | 0 | 0 | cassant—non mesurable | 10 |
| 44,783 | 0,217 | 0,3 | 26 | 4 500 |

On voit que la contrainte à rupture qui est pratiquement nulle pour le PP greffé est passée à la valeur 26 par addition d'hexanediol (celle du même polypropylène non greffé est de 22N/mm2).

## Exemple 2

En utilisant un mode opératoire analogue à celui de l'exemple 1, on greffe 4,1% d'anhydride maléique sur un copolymère de proplène de d'éthylène séquencé vendu par la Société ATOCHEM sous l'appellation LACQTENE P 3050 MN4 (Indice de fluidité à 230°C sous 5 kg égal à 5).

Ce copolymère greffé dont la viscosité de fusion et de 100 Pa.s à 200°C à 10 $s^{-1}$ est alors malaxé dans le même malaxeur BRABENDER que celui de l'exemple 1, toujours à la température de 178°C, seul ou avec différents réactifs: dodécanol-1, polyoxytétraméthylène glycol (PTMG), polyoxyéthylène glycol (PEG), oligomère de polyamide 11 alpha-oméga diamine (PA di $NH_2$) de masse moléculaire 1050 obenu par polycondensation d'acide ll-aminoundécanoïque en présence d'hexaméthylène diamine, suivant le mode opératoire décrit dans la demande de brevet françcaise n° 84—13244.

On enregistre le couple résistant du malaxeur après 10 minutes de mélange à 178°C et comme dans l'exemple 1, mesure les propriétés de plaquettes moulées à partir des polymères résultant du malaxage.

Les résultats consignés sur le tableau I montrent que, par rapport au copolymère 3050 MN4 (couple résistant: 1,35 kg/m, contrainte de rupture: 22,5 N/mm2, allongement: 130%), on obtient dans la plupart des cas une augmentation des propriétés physiques.

L'addition d'un réactif monofunctionnel tel le dodécanol-1 n'apporte aucune amélioration.

TABLEAU I

| Poids de PPg en g | Reactif | | $RM = \dfrac{[OH]}{[AM]}$ | Couple résistant en Kg.m | Proprietes Mecaniques | |
| --- | --- | --- | --- | --- | --- | --- |
| | Nature | Poids en g | | | Contrainte à la rupture en MPa | Allongement à la rupture en % |
| 45 | | 0 | 0 | 0,17 | non mesurable | 0 |
| 43,31 | dodécanol-1 | 1,69 | 0,5 | 0,14 | non mesurable | 0 |
| 41,75 | " | 3,25 | 1,0 | 0,14 | non mesurable | 0 |
| 42,12 | PTMG Mn = 650 | 2,88 | 0,5 | 1,90 | 28 | 315 |
| 39,59 | " | 5,41 | 1,0 | 2,40 | 28 | 310 |
| 42,33 | PEG Mn = 600 | 2,67 | 0,5 | 1,64 | 24 | 330 |
| 41,50 | PEG Mn = 2.000 | 3,50 | 0,2 | 0,75 | 15 | 37 |
| 37,18 | " | 7,82 | 0,5 | 0,90 | 18 | 390 |
| | | | $RM = \dfrac{[NH_2]}{[AM]}$ | | | |
| 44,03 | PA di NH$_2$ Mn = 1050 | 0,90 | 0,1 | 0,32 | 15 | 0 |
| 40,53 | " | 4,47 | 0,5 | non mesurable trop élevé | 20 | 0 |

# EP 0 177 401 B1

### Exemple 3

Comme dans l'exemple 2, on modifie par greffage du LACQTENE P 3050 MN4 mais cette fois-ci on ne greffe que 1,3% d'anhydride maléique: le PPg obtenu a un indice de fluidité à 190°C sous 2,16 kg de 26,3.

Il est malaxé alors 10 minutes dà 180°C avec un copolymère éthylène-acétate de vinyle (à 28% d'acétate de vinyle) hydrolysé (EVA OH) dont l'équivalent molaire en fonction hydoxyle, mesuré par analyse infra-rouge est de 0,2 mole OH/100 g de résine.

| Poids de PPg en g | Poids d'EVA OH en g | $RM = \dfrac{[OH]}{[AM]}$ | Indice de fluidité à 190°C sous 2,16 kg |
|---|---|---|---|
| 45,00 | 0 | 0 | 26,3 |
| 44,55 | 0,45 | 0,15 | 21,8 |
| 43,65 | 1,35 | 0,46 | 18,2 |
| 42,75 | 2,25 | 0,79 | 6,6 |

Cet exemple montre que, dans le cas d'un réactif polymérique porteur de fonctions alcools secondaires, le phénomène d'allongement de chaîne a lieu pour des rapports molaires inférieurs à l'unité.

### Exemple 4

Comme dans l'exemple 2, on modifie par greffage du LACQTENE P 3050 MN 4 mais cette fois-ci on greffe que 3,8% d'anhydride maléique. Le PPg obtenu a une viscosité de fusion mesurée à 200°C à l'aide d'un RHEOMAT 30 de 100 Pa.s.

Il est alors malaxé dans le málaxeur BRABENDER seul ou avec les réactifs suivants, pendant 15 minutes à 180°C:

résine époxy DER 732, polypropylène glycol alpha-oméga diépoxyde, commercialisée par la Société DOW CHEMICAL et da caractéristiques suivantes:

viscosité à 25°C: 55 à 100 cps;

poids en grammes de résine contenant 1 équivalent gramme époxy: 305—335;

copolymère de l'éthylène de du méthacrylate de glycidyle (E—GMA) statistique ayan une teneur pondérale de 5% en GMA.

### Exemple 5

Les résultants obtenus sont consignés dans le tableau II.

Toujours dans le même malaxeur, on brasse le PPg de l'exemple 4 seul ou avec de l'hexaméthylène diisocyanate-1,6 (HMDI) de Mw = 168.

| Poids de PPg en g | Poids de HMDI en g | $RM = \dfrac{\text{Isocyanate}}{[AM]}$ | Couple résistant en Kg.m |
|---|---|---|---|
| 45 | 0 | 0 | 0,12 |
| 43,58 | 1,42 | 1 | non mesurable |

L'augmentation du couple traduit bien la réactivé entre les deux constituants qui engendrent un polymère à l'éta poudreux.

6

TABLEAU II

| Poids de PPg en g | Reactif | | $RM = \dfrac{[Epoxy]}{[AM]}$ | Couple résistant du malaxeur en Kg.m | Proprietes Mecaniques | |
|---|---|---|---|---|---|---|
| | Nature | Poids en g | | | Contrainte à la rupture en MPa | Allongement à la rupture en % |
| 45 | / | 0 | 0 | 0,12 | non mesurable | 0 |
| 43,6 | DER 732 | 1,4 | 0,25 | 0,39 | non mesurable | non mesurable |
| 42,28 | " | 2,72 | 0,50 | 0,63 | 20,2 | 5 |
| 36,84 | E GMA | 8,16 | 0,2 | 0,38 | non mesurable | 4 |
| 28,95 | " | 16,05 | 0,5 | 0,58 | 14 | 10 |
| 21,35 | " | 23,65 | 1,0 | 0,72 | 11,8 | 22,5 |
| 2,25 | " | 42,75 | 17,2 | 0,32 | 8,0 | 550 |
| 0 | " | 45 | infini | 0,26 | 7,6 | 602 |

EP 0 177 401 B1

Exemple 6

On greffe de l'anhydride maléïque sur un copolymère statistique de propylène de d'éthylène de la manière suivante:

Dans un autoclave, on introduit:

5 500 g de monochlorobenzène

1 200 g de LACQTENE 3020 GN3 (copolymère à 95% molaire de propylène et 5% éthylène, vendu par la société ATOCHEM — indice de fluidité ASTM D 1238 à 230°C sous 5 Kg égal à 2)

200 g d'anhydride maléïque

36 g de péroxyde de benzoyle

Après maintien pendant 3 heures à la température de 130°C, on obtient un polypropylène greffé à 3,4% dont la viscosité de fusion mesurée à 200°C à l'aide d'un RHEOMAT 30 à un taux de cisaillement de 10 s$^{-1}$ est de 9 Pa.s alors que celle du LACQTENE 3020 GN3 était de 1500 Pa.s dans les mêmes conditions.

On porte dans un bécher 278,4 g du polypropylène greffé obtenu ci-dessus à la température de 200°C.

Dans un autre bécher, on procède au chauffage vers 80—100°C de 21,6 g de polyoxyéthylène glycol de masse moléculaire moyenne en nombre de 600. Le rapport molaire

$$\frac{[OH]}{[AM]}$$

vaut dans ces conditions 0,75.

On verse le PEG Mn = 600 dans le bécher contenant le polypropylène graffé. Le mélange est effectué à l'aide d'un agitateur en verre à la main pendant 90 secondes. Au cours du mélangeage, la viscosité du milieu augemente jusqu'à l'obtention d'un liquide homogène jaune pâle; on coule ce liquide dans un moule en acier de 160 × 160 × 2 mm que l'on maintient à 200°C pendant 15 minutes entre les plateaux chauffants d'une presse hydraulique développant une pression de 12 tonnes. Après refroidissement et démoulage, on obtient une plaque jaune pâle.

Les propriétés mécaniques du matériau sont données dans le tableau III.

Exemple 7

On procède suivant le même mode opératoire que dans l'exemple précédent, mais en utilisant comme réactif un polyoxyéthylène glycol de masse moléculaire moyenne en nombre de 2000 avec les quantités suivantes:

Polypropylène greffé à 3,4% en AM: 238,2 g

PEG Mn = 2000: 61,8 g

$$RM = \frac{[OH]}{[AM]} = 0,75$$

Les propriétés mécaniques du matériau sont, données dans le tableua III.

Exemple 8

On procédé suivant le même mode opératoire que dans l'exemple précédent, mais en utilisant comme réactif un oligomère de polyamide II alpha-oméga diamine (PA di NH$_2$) de masse moléculaire moyenne en nombre 6621 avec les quantités suivantes:

Polypropylène greffé à 3,4% en AM: 193,8 g

PA di NH$_2$ Mn = 6621 = 106,2 g

$$RM = \frac{[NH_2]}{[AM]} = 0,5$$

Dans ce cas, la durée du mélange ne doit pas excéder 10 secondes; le mélange homogène et visqueux obtenu est versé dans un moule. La durée total des opérations de mélange des constituants et de remplissage du moule ne doit pas dépasser 30 secondes.

La plaque obtenue est homogène et translucide. Les propriétés mécaniques du matériau sont données dans le tableau III.

Exemple 9

En procédant suivant le même mode opératoire que dans l'exemple précédent, mais en utilisant comme réactif le diglycidyléther be biphénol A (DGEBA: M$_w$ = 352) commercialisé par la société DOW

8

CHEMICAL sous la référence DER 332 avec les quantités suivantes:
Polypropylène greffé à 3,4% en AM: 291 g
DER 332: 9 g

$$RM = \frac{[Epoxy]}{[AM]} = 0,5$$

Dans la bécher contenant le polypropylène greffé préalablement porté à 200°C, on verse la quantité donnée de DER 332. Le mélange est assuré à l'aide d'un agitateur en verre, à la main, pendant 90 secondes. Au cours du mélange, la viscosité du milieu augmente jusqu'à l'obtention d'un liquide homogène jaune. On verse cette résine dans un moule en acier maintenu à 200°C pendant 15 minutes sous une pression de 12 tonnes. Après refroidissement et démoulage, on obtient une plaque de couleur jaune.

Les propriétés mécaniques du matériau sont données dans le tableau III.

TABLEAU III

|  | Contrainte a la rupture en MPa | Allongement a la rupture en % |
|---|---|---|
| Exemple 6 | 18,5 | 250 |
| Exemple 7 | 13,0 | 270 |
| Exemple 8 | 20 | 0 |
| Exemple 9 | 15 | 0 |
| Temoin — PPg pur | non mesurable | 0 |

Exemple 10

On utilise une machine de réaction-injection-moulage (RIM) MARTIN SWEETS, du type FLEXAMATIC RHPI, pour réaliser des plaques moulées, par réaction du PP greffé par l'anhydride maléïque de l'exemple 6 avec un polyoxyéthylène glycol de masse moléculaire moyenne en nombre de 600.

La machine est constituée des éléments suivants:
une tête de mélange à deux entrées qui, en position ouverte, assure le mélange intime des deux réactifs et leur transfert vers le moule décrit ci-dessous, et en position fermée, assure la recirculation, sans mélange, de chacun des réactifs vers les lignes A et B décrites ci-dessous;
un moule carré de dimensions 305 × 305 × 3 mm alimenté par le mélange provenant de la tête de mélange;
deux lignes A et B connectées à la tête de mélange, comprenant chacune une capacité de stockage pour l'un ou l'autre des réactifs et un élément doseur commandé hydrauliquement. Cet élément doseur permet, soit la recirculation en circuit fermé entre la capacité de stockage et la tête de mélange en position fermée, du réactif de la ligne, sans mélange avec le réactif de l'autre ligne, soit l'injection du réactif dans la tête de mélange en position ouverte, la pression de refoulement permettant simultanément le mélange intime avec le réactif venant de l'autre ligne et l'écoulement du mélange dans le module. On trouvera une description détaillée du principe des machines RIM dans l'ouvrage: Introduction to Reaction Injection Moulding, Technomic Publ. Co. Inc. 1979 — pp. 77 à 126.

Tous les éléments de la machine peuvent être régulés jusqu'à une température de 235°C et la température de fonctionnement de chaque élément peut être fixée indépendammment de celle des autres éléments.

Le rapport molaire entre les deux réactifs et l'homogénéité de mélange est détérminé en agissant, d'une part sur les réglages des éléments doseurs de chaque ligne, d'aurte part sur le diamètre du clapet reliant chaque ligne à la tête de mélange.

Les conditions des essais réalisés sur la machine RIM sont rassemblés dans le tableau n° IV.

Le moule est parfaitement rempli et les plaques obtenues présentent un bei aspect de surface et une excellente homogénéité. Les propriétés du matériau obtenu sont données dans le tableau n° V.

TABLEAU IV

| Ligne A | | Ligne B | | Temperature de melange en °C | Moule | | |
| PPg Viscosite 9 Pa.s à 200°C | | PEG Mn: 600 | | | Temperature °C | Duree de remplissage en sec. | Duree de maintien en sec. |
| Débit g.s$^{-1}$ | Température °C | Débit g.s$^{-1}$ | Température °C | | | | |
| 111 | 200 | 8,6 | 140 | 200 | 190 | 4 | 600 |
| 95,3 | 200 | PEG Mn: 2000 | | 200 | 190 | 4 | 600 |
| | | 24,7 | 140 | | | | |

EP 0 177 401 B1

TABLEAU V

| Composition en poids (%) | | Rapport molaire [OH] [AM] | Proprietes des plaques obtenues | | | | | Durete Shore D (ISO D 868) |
| | | | Traction (ASTM D 638) | | Flexion (ASTNM D 790) | | | |
| PPg | PEG Mn | | Contrainte a la rupture MPa | Allongement a la rupture % | Fleche a la charge maxi mm | Contrainte a la charge maxi MPa | Module D' elasticite MPa | |
| 92,8 | PEG 600 7,2 | 0,75 | 18 | 250 | 9,6 | 26,8 | 650 | 69 |
| 79,4 | PEG 2000 20,6 | 0,75 | 13 | 250 | 9,3 | 17,9 | 570 | 67 |

## EP 0 177 401 B1

Exemple 11

Fabrication d'un materiau composite

Le PP greffé de l'exemple 2 est réduit en poudre fine par broyage et la poudre ainsi obtenue est empâtée de polyoxyéthylène glycol de masse moléculaire 600, à raison de 6,3 g pour 100 g de PPg, ce qui correspond à un rapport moléculaire

$$\frac{[OH]}{[AM]}$$

de 0,5.

On dépose par saupoudrage la poudre empâtée sur un mat de fibres de verre longues du type OWENS CORNING FIBERGLAS 8610—900 g/m$^2$.

Ce mat imprégné de poudre ensuite placé entre deux feuilles préextrudées de 1 mm d'épaisseur de polypropylène standard (Lacqtène P 3030 FN1—ATOCHEM) de melt index 3 mesuré à 230°C sous, 2,16 Kg selon la norme ASTM 1238.

On répète l'opération précédent de manière à obtenir un empilement de trois couches de mat imprégnées de poudres et quatre feuilles de polypropylène standard de 1 mm d'épaisseur.

L'ensemble est préchauffé à 200°C pendant 3 minutes entre les plateaux d'une presse puis comprimé à la même température sous 25 bars pendant 1 minute. L'ensemble est ensuite refroidi sous pression jusqu'à 80°C. On obtient un composite de 3,3 mm.

A titre comparatif on prépare dans les mêmes conditions un composite de structure identique, à partir uniquement de mat de verre et de polypropylène standard, l'épaisseur des couchs de polypropylène étant corrigée de manière à obtenir un composite identique en épaisseur et taux de verre.

Les résultats des essais mécaniques effectués sur ces produits sont donnés dans le tableau suivant:

|  |  | Essai comparatif |
|---|---|---|
| % Fibres de verre massique | 45 | 45 |
| Traction<br>Résistance à la rupture MPa | 125 | 87 |
| Flexion<br>Contrainte maxi MPa |  |  |
|  | 150 | 100 |
| Module d'élasticité MPa | 6 450 | 5 146 |

Revetement d'objets metalliques

Dans le domaine des revêtements, on peut appliquer aux résines, selon l'invention, les mêmes techniques que celles utilisées pour les poudres des polyamides, mais, contrairement à ces dernières, on peut obtenir des revêtements présentant une adhérence élevée sur l'acier sans qu'il soit nécessaire de traiter au préalable le support métallique par un sous-couche destinée à permettre un bon accrochage du revêtement polyamide. Pour réaliser ces revêtements, différentes techniques sont possibles: on peut utiliser une poudre obtenue par broyage de prépolymère homogène obtenu par mélange à l'état fondu dans une machine de compoundage appropriée de l'oligomère PPg et du réactif R, tels qu'ils ont été définis précédemment. On peut aussi utiliser une poudre constituée d'un mélange mécanique, réalisé à froid, de l'oligomère PPg d'une part, du réactif R d'autre part. Le revêtement du subjectile à partir de ces poudres peut se faire selon les techniques connues du revêtement, par exemple, par projection électrostatique suivie d'une cuisson de quelques minutes à témperature élevée, comprise entre 200 et 250°C, ou par trempage du subjectile, préalablement chauffé à haute température, dans un lit fluidisé où la poudre est maintenue en suspension.

Exemple 12

On greffe de l'anhydride maléïque sur un copolymère de propylène et d'éthylène séquèncé suivant le mode opératoire décrit dans l'exemple 2. Par passage dans un broyeur, on réduit en poudre fine de granulométrie (mesurée au compteur COULTER) inférieure à 80 microns le PP greffé obtenu.

Par ailleurs, on dissout 13 g de polyoxyéthylène glycol de masse moléculaire moyenne en nombre 600 dans 34 g de 2-Ethoxyéthyl acétate. On ajoute 100 g de PP greffé tel que décrit précédemment. Le rapport molaire

$$\frac{[OH]}{[AM]}$$

vaut 1.

On réalisé une dispersion à la turbine pendant 5 à 10 minutes. Cette dispersion est appliqué à la barre

de 80 μm sur une plaque d'aluminium dégraissée. La plaque ainsi revêtue est placee dans une étuve pendant 3 minutes à 200°C puis refroidie par immersion dans l'eau. On obtient un film d'épaisseur 20 μm de très bonne résistance à la méthyléthylcétone.

Le film est transparent, semi-brillant et possède une excellent adhésion ainsi que d'excellentes propriétés mécaniques.

Dans un ainsi comparatif, le PP greffé est utilisé seul sans PEG. Le film obtenu est cassant et donc impropre à la réalisation d'un revêtement.

Exemple 13

Dans 100 g de 2-Butoxyéthylacétate (acétate de butyl glycol du commerce), on dissout 10 g de résine époxyde DGEBA—EPIKOTE 828 de la société SHELL dont le poids équivalent en époxy (poids de résine correspondant à 1 mole époxy) est 187 puis disperse dans cette solution 120 g de PPg de l'exemple 2, grâce à une turbine, pendant 5 à 10 minutes.

La viscosité est ensuite réduite par addition de 200 g d'acétate de butylglycol.

La rapport molaire

$$\frac{[Epoxy]}{[AM]}$$

vaut 1.

La dispersion obtenue est appliquée à la barre de 80 μm sur une plaque d'aluminium dégraissée. La plaque ainsi revêtue est étuvée 3 minutes à 200°C puis refroidie par immersion dans l'eau. On obtient un film de 20 microns d'épaisseur, de bonne résistance à la méthyléthylcétone. Ce film est transparent, semi-brillant et possède une excellente adhésion ainsi que de très bonnes propriétés mécaniques.

Exemple 14

On mélange à sec 250 g de PPg issue de l'exemple 2 avec 90 g de résine époxyde EPIKOTE 3003 (poids équivalent en époxy 725—825) (SHELL) préalablement broyée et 0,5 g d'alumine. La poudre obtenue est appliquée au pistolet électrostatique (+ 60 KV) sur une plaque d'acier lisse dégraissée. La plaque est étuvée pendant 5 minutes à 200°C. On obtient un film d'épaisseur 30/35 μm, transparent, semi-brillant, recouvrant bien les arêtes.

La résistance à la méthyléthylcétone de ce film, son adhérence sur la plaque d'acier et ses propriétés mécaniques sont bonnes.

## Revendications

1. Procédé de fabrication d'objets moulés par la technique de réaction-injection-moulage ou de fabrication d'éléments profilés à âme en fibres de verre ou de revêtement d'objet métallique, procédé mettant en oeuvre un mélange liquide constitué d'une part d'un polypropylène greffé en milieu solvant par une monomère insaturé porteur de fonction anhydride d'acide, ledit polypropylène greffé possédant une viscosité de fusion, mesurée à 200°C pour un taux de cisaillement de 10 $s^{-1}$, inférieure à 500 Pa.s et d'autre part un composé R possédant au moins deux fonctions réactives vis à vis de cette fonctionanhydride, identiques ou non, caractérisé en ce que les quantités respectives de ces deux constituants sont telles que leur rapport de molarité, défini comme le rapport du nombre de fonctions réactives portées par le composé R au nombre de fonctions anhydrides portées par le polypropylène greffé, soit compris entre 0,01 et 2 et de préférence, entre 0,1 et 1.

2. Procédé selon la revendication 1 caractérisé en ce que le propylène est greffé avec l'anhydride maléïque.

3. Procédé selon l'une des revendications 1 et 2 caractérisé en ce que le composé R appartient au groupe constitué par les polyols, les polyamides, les polyépoxydes et les polyisocyanates et a un poids moléculaire inférieur à 50 000.

4. Procédé selon la revendication 3 caractérisé en ce que le composé R est l'hexanediol-1,6.

5. Procédé selon la revendication 3 caractérisé en ce que le composé R appartient au groupe constitué par les polyoxyéthylène glycols et les polyoxytétraméthylène glycols.

6. Procédé selon la revendication 3 caractérisé en ce que le composé R est un oligomère de polyamide 11 alpha-oméga diamine.

7. Procédé selon la revendication 3 caractérisé en ce que le composé R est un copolymère éthylène-acétate de vinyle hydrolysé.

8. Procédé selon la revendication 3 caractérisé en ce que le composé R appartient au groupe constitué par les polypropylène glycol alpha-oméga diépoxydes et les copolymères éthylène-méthacrylate de glycidyles.

## Patentansprüche

1. Verfahren zur Herstellung von Formteilen durch Reaktionsspritzgießen die Fabrikation von glasfaserverstärkten Profilelementen, oder die Beschichtung von Metallteilen, bei dem man eine flüssige

# EP 0 177 401 B1

Mischung herstellt, die einerseits aus einem Polypropylen besteht, dem in gelösten Zustand ein ungesättigtes, die funktionelle Gruppe eine Säureanhydrids enthaltendes Monomeres aufgepfropft wurde, wobei das gepfropfte Polypropylen eine Schmelzviskosität (gemessen bei 200°C und einem Scherverhältnis von 10 s$^{-1}$), unter 500 Pa.s hat und die andererseits aus einer Verbindung R besteht, die mindestens zwei, ggf. identische, gegenüber der Anhydridgruppe reaktionsfähige Gruppen besitzt, —dadurch gekennzeichnet, daß die Mengenverhältnisse dieser zwei Bestandteile derart sind, daß ihre durch das Verhältnis der Zahl der reaktiven Gruppen der Verbindung R zur Zahl der funktionellen Anhydridgruppen des Pfropfpolypropylens definierten Molverhältnisse zwischen 0,01 und 2, und vorzugsweise zwischen 0,1 und 1 liegen.

2. Verfahren nach Anspruch 1, dadurch gekennzeichnet, daß das Propylen mit Maleinsäureanhydrid pfropfcopolymerisiert wird.

3. Verfahren nach einem der Ansprüche 1 oder 2, dadurch gekennzeichnet, daß die Verbindung R zu der von Polyolen, Polyamiden, Polyepoxiden und Polyisocyanaten gebildeten Gruppe gehört und eine relative Molmasse kleiner als 50 000 hat.

4. Verfahren nach Anspruch 3, dadurch gekennzeichnet, daß die Verbindung R 1,6-Hexandiol ist.

5. Verfahren nach Anspruch 3, dadurch gekennzeichnet, daß die Verbindung R zur Gruppe der Polyoxyethylenglykole oder der Polyoxytetramethylenglykole gehört.

6. Verfahren nach Anspruch 3, dadurch gekennzeichnet, daß die Verbindung R ein Oligomeres von 11-alpha-omega-Diamin-polyamid ist.

7. Verfahren nach Anspruch 3, dadurch gekennzeichnet, daß die Verbindung R ein hydrolysiertes Ethylen-Vinylacetat-Copolymeres ist.

8. Verfahren nach Anspruch 3, dadurch gekennzeichnet, daß die Verbindung R zur Gruppe der Polypropylenglykol-alpha-omega-diepoxide oder her Ethylen-Glycidylmethacrylat-Copolymere gehört.

## Claims

1. Process for the manufacture of moulded objects using the reaction injection moulding technique or for the manufacture of profile elements with a glass fibre core or for the coating of a metal object, a process making use of a liquid mixture consisting, on the one hand, of a polypropylene grafted in a solvent medium with an unsaturated monomer bearing an acid anhydride functional group, the said grafted polypropylene having a melt viscosity, measured at 200°C at a shear rate of 10 s$^{-1}$, of less than 500 Pa.s and, on the other hand, a compound R containing at least two functional groups reactive towards this anhydride functional group, which are identical or otherwise, characterized in that the respective quantities of these two constituents are such that their molarity ratio, defined as the ratio of the number of reactive functional groups carried by the compound R to the number of the anhydride functional groups carried by the grafted polypropylene, is between 0.01 and 2 and preferably between 0.1 and 1.

2. The process according to Claim 1, characterized in that the propylene is grafted with maleic anhydride.

3. Process according to either of Claims 1 and 2, characterized in that the compound R belongs to the group consisting of polyols, polyamides, polyepoxides and polyisocyanates and has a molecular weight of less than 50,000.

4. Process according to Claim 3, characterized in that the compound R is 1,6-hexanediol.

5. Process according to Claim 3, characterized in that the compound R belongs to the group consisting of polyoxyethylene glycols and polyoxytetramethylene glycols.

6. Process according to Claim 3, characterized in that the compound R is an alpha, omega-diamine polyamide 11 oligomer.

7. Process according to Claim 3, characterized in that the compound R is a hydrolysed ethylene/vinyl acetate copolymer.

8. Process according to Claim 3, characterized in that the compound R belongs to the group consisting of polypropylene glycol alpha, omega-diepoxides and ethylene/glycidyl methacrylate copolymers.